Europäisches Patentamt

European Patent Office

Office européen des brevets

(11) Publication number: **0 361 639 B1**

## EUROPEAN PATENT SPECIFICATION

(45) Date of publication of patent specification: **20.09.95**

(51) Int. Cl.6: **F16L 47/00**, F16L 9/12, B29C 70/00, B29D 23/00, F16C 3/02, F16D 1/02, E21B 17/00, E21B 17/042

(21) Application number: **89303753.1**

(22) Date of filing: **17.04.89**

(54) **Bar-like molding made of fiber-reinforced plastic material and method of manufacturing the same.**

(30) Priority: **24.06.88 JP 156140/88**
**31.03.89 JP 82846/89**

(43) Date of publication of application:
**04.04.90 Bulletin 90/14**

(45) Publication of the grant of the patent:
**20.09.95 Bulletin 95/38**

(84) Designated Contracting States:
**BE DE FR GB IT NL SE**

(56) References cited:
FR-A- 1 537 562      FR-A- 2 271 024
GB-A- 1 553 220      GB-A- 2 017 260
JP-A- 1 101 140      US-A- 3 661 670
US-A- 4 248 062

DERWENT WPIL 88-232393 [33], DW8833, Derwent Publications Ltd. and JP-A-63167185

(73) Proprietor: **Tonen Corporation**
**1-1 Hitotsubashi, 1-Chome**
**Chiyoda-Ku**
**Tokyo 100 (JP)**

(72) Inventor: **Kobayashi, Akira**
**c/o Tonen Corporation**
**1-1 Hitotsubashi 1-chome**
**Chiyoda-ku**
**Tokyo (JP)**
Inventor: **Yoshizawa, Hiroyuki**
**c/o Tonen Corporation**
**1-1 Hitotsubashi 1-chome**
**Chiyoda-ku**
**Tokyo (JP)**
Inventor: **Ohori, Naohiro**
**c/o Tonen Corporation**
**1-1 Hitotsubashi 1-chome**
**Chiyoda-ku**
**Tokyo (JP)**

(74) Representative: **Greenwood, John David et al**
**Graham Watt & Co.**
**Riverhead**
**Sevenoaks**
**Kent TN13 2BN (GB)**

EP 0 361 639 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention generally relates to a boring casing made of a fiber-reinforced plastic material and a method of manufacturing the same. More specifically, this invention relates to a bar-like molding made of a fiber-reinforced plastic material which can be extended through connection, and in particular to one which is suitable for transmitting torque and impulsive force. For example, it is suited to be used as a component of the connected drilling pipe assembly of a boring machine in the fields of civil engineering, oil drilling, etc.

As the connected drilling pipes of a boring machine, for example, steel pipes have conventionally been employed. When using steel pipes as the components of a connected pipe assembly, i.e., as drilling pipes, a male screw is formed at one end of each pipe and a female screw at the other end thereof previously, adjacent pipes being directly connected to each other by engaging the male and female screws formed at the ends. By thus connecting pipes, a pipe assembly of any desired length can be obtained. Alternatively, both ends of each pipe may be formed as female screws, adjacent screws being connected to each other through the intermediary of a connecting short pipe having male screws.

Being made of steel, conventional drilling pipes are attended by the following problems:

(1) Since they are relatively heavy, the operation of connecting them together for extension is labor intensive. This is especially true if the working site is located in a tunnel or on a slope of a mountain. Under such bad conditions, various problems such as prolonged working time and danger in conveying and connecting the pipes may be involved. Their heaviness is inconvenient not only in terms of operational efficiency; if a boring operation is to be performed as deep as several thousands of meters, the weight of the drilling pipes themselves will amount to several hundreds of tons, so that a special support structure may be required for them.

(2) When acid treatment is performed, as in boring for petroleum and natural gas, the hydrochloric acid used will corrode the drilling pipes.

With a view to overcoming these problems, the applicant of the present invention proposed an extension pipe made of fiber-reinforced plastic materials which comprises a hollow pipe made of fiber-reinforced plastic materials and connecting short length metal pipes having a predetermined length and attached to the ends of the hollow pipe, the short length metal pipes including male or female screws for connection (see Japanese Patent Application Kokai Nos. 63-167185 and 63-167184).

The fiber-reinforced plastic pipe proposed is quite advantageous in that it can well withstand percussions and that its weight can be about 1/2 of a conventional steel pipe. However, it is not satisfactory as a pipe for transmitting a high torque.

In this regard, the applicant of this invention discovered the fact that a considerably high torque amounting up to 600 kg•m can be transmitted when an uneven surface configuration is imparted by knurlizing or the like to the outer peripheral surface of a connecting short length metal pipe adapted to be engaged with the inner peripheral surfaces at the ends of a hollow fiber-reinforced plastic pipe, and proposed a fiber-reinforced plastic pipe accordingly constructed (Japanese Patent Application No. 62-260754 published 19th April 1989).

It has been found, however, that, when used for percussion boring, the fiber-reinforced plastic material pipe disclosed in Japanese Patent Application Kokai Nos. 63-167185 and 63-167184 (both published 11th July 1988) and that proposed in Japanese Patent Application No. 62-260754 can provide only a lower boring speed, i.e., a poorer boring efficiency, as compared with conventional steel boring casings.

The inventors of the present invention conducted a number of experiments with a view to improving the boring efficiency of a fiber-reinforced plastic pipe, and have discovered the fact that, by increasing its axial stiffness, the impulsion transmitting properties of a fiber-reinforced plastic pipe can be augmented, thereby remarkably improving the boring efficiency thereof. In some cases, a boring casing utilizing fiber-reinforced plastic pipes can provide a boring efficiency equal or superior to that provided by conventional boring casings using steels.

The present invention is based on this newly obtained knowledge. US-4,248,062 discloses a multi-layered fibre reinforced shaft. The present invention comprises the features of claim 1, in a first aspect, and of claim 8, in a second aspect.

It is accordingly an object of this invention to provide an improved bar-like molding made of a fiber-reinforced plastic in the form of a hollow pipe or a solid shaft of the type which can be extended through connection; this invention aims at providing a bar-like molding of the above-described type which has a relatively light weight, which involves no corrosion problems, and which can transmit a relatively high torque and impulsion, withstand percussion, and provide a high axial stiffness, so that it can improve the boring efficiency when used as a component of a boring casing. Another object of this invention is to provide a method of manufacturing a bar-like molding made of a fiber-reinforced plastic material having the characteristics described above.

The outer fiber-reinforced plastic covering layer has a fiber-reinforced plastic layer whose reinforcing fibres are arranged in the axial direction. Furthermore, the outer peripheries of the short length metal pipes are equipped with an uneven surface configuration. This bar-like molding made of fiber-reinforced plastic materials is realized in the form of a hollow pipe or a solid shaft.

The outermost layer of the outer fiber-reinforced plastic covering layer is formed as a layer whose reinforcing fibers are arranged 90° to the axial direction, and more preferably, an innermost layer of the inner fiber-reinforced plastic covering layer is also formed as a layer whose reinforcing fibers are arranged 90° to the axial direction.

The fiber-reinforced plastic layers of the inner and outer fiber-reinforced plastic covering layers are formed by the filament winding method using impregnated fibers, or the winding method using prepreg.

Fig. 1 is a sectional view of a bar-like molding made of fiber-reinforced plastic materials;

Figs. 2 and 3 are perspective view of the short length metal pipes for connection used in the bar-like molding made of fiber-reinforced plastic materials shown in Fig. 1;

Fig. 4 is a graph showing the relationship between the stiffness of the inner pipe and the relative velocity;

Fig. 5 is a graph showing the relationship between the stiffness of the outer pipe and the relative velocity;

Figs. 6 to 8 are graphs showing the relationship between the stiffness of the bar-like molding made of fiber-reinforced plastic materials and the impulsive transmission characteristics thereof;

Fig. 9 is a sectional view of an embodiment of the bar-like molding made of fiber-reinforced plastic materials of this invention in the form of a solid shaft;

Fig. 10 is a sectional view of an embodiment of the bar-like molding made of fiber-reinforced plastic materials according to the present invention; and

Figs. 11(A) to 11(D) are diagrams illustrating the process of manufacturing the bar-like molding made of fiber-reinforced plastic materials of this invention.

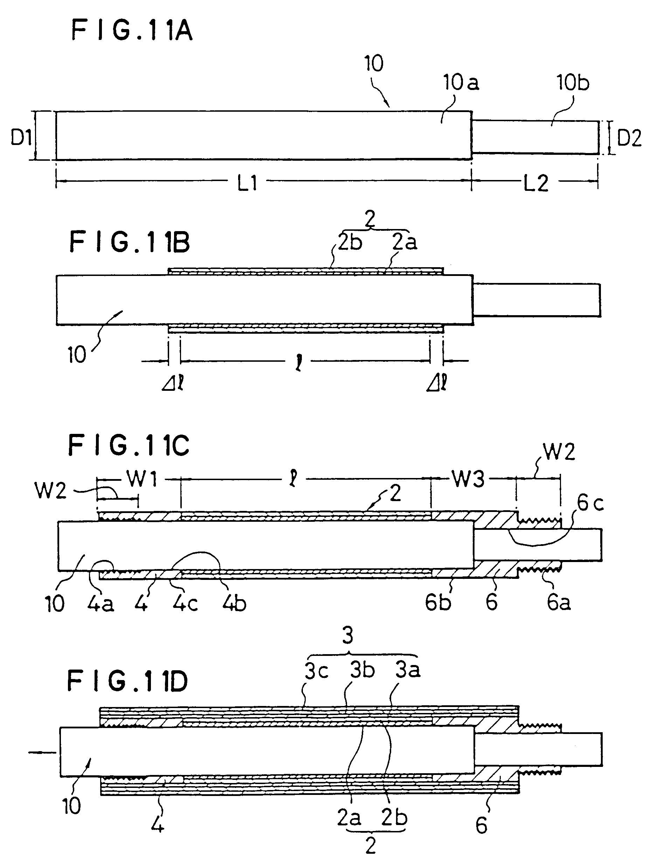

Embodiments of the bar-like fiber-reinforced plastic molding of this invention will now be described in more detail with reference to Figure 10 of the accompanying drawings and with reference to the remaining Figures of the accompanying drawings which relate to moldings other than according to the present invention but which are useful in understanding and putting the present invention into practice.

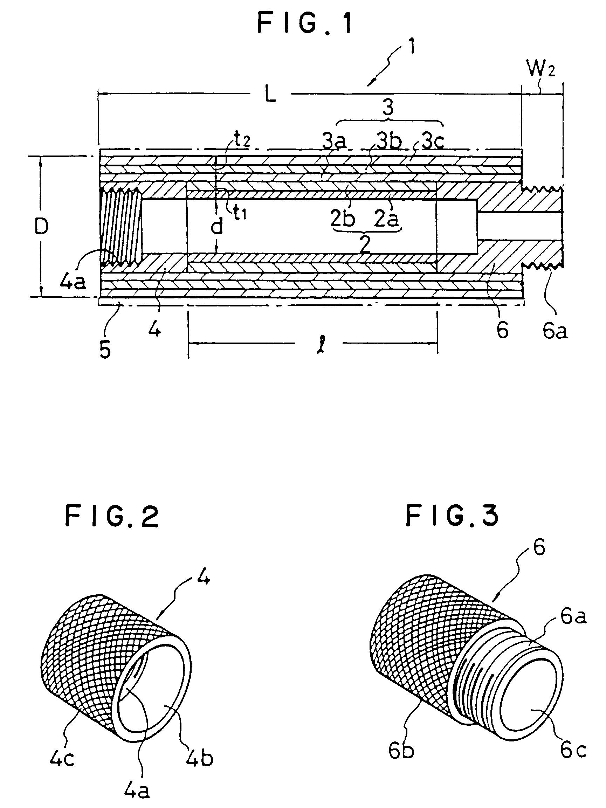

Referring to Figure 1, a bar-like fiber-reinforced plastic molding is realized, in particular, in the form of a hollow pipe made of fiber-reinforced plastic materials (hereinafter referred to as an "FRP pipe").

The FRP pipe 1 of this molding comprises a fiber-reinforced plastic covering layer 2-3 formed by laminating a plurality of fiber-reinforced plastic layers, and short length metal pipes for connection 4 and 6 which are arranged at the ends of the fiber-reinforced plastic covering layer.

More specifically, the fiber-reinforced plastic covering layer includes an inner fiber-reinforced plastic covering layer or an inner pipe 2 having a length $\ell$, an inner diameter d and a wall thickness t1. The end surfaces of the inner pipe 2 abut the respective inner end surfaces of the short length metal pipes for connection 4 and 6. Further, the inner pipe 2 is composed of a plurality of fiber-reinforced plastic layers; in this molding, it consists of two fiber-reinforced plastic layers 2a and 2b, the reinforcing fibers of the fiber-reinforced plastic layer 2b being arranged in the axial direction. The innermost layer 2a serves as a protective layer in this embodiment, and is preferably formed from glass fiber cloth prepreg.

The fiber-reinforced plastic covering layer further includes an outer fiber-reinforced plastic covering layer or an outer pipe 3 laminated in such a manner as to cover the outer peripheries of the inner pipe 2 and the short length metal pipes 4 and 6. The outer pipe 3 is composed of a plurality of laminated fiber-reinforced plastic layers and has a length L, an outer diameter D and a wall thickness t2. In this molding, the outer pipe 3 consists of three fiber-reinforced plastic layers 3a, 3b and 3c, the reinforcing fibers of at least one of which (in this embodiment, the fiber-reinforced plastic layer 3b) are oriented along the axial direction.

In the present invention a protective layer 5 is provided outside the outermost layer 3c of the outer pipe 3. When, for example, the FRP pipe 1 is used as a boring casing, the protective layer 5 serves to prevent the surface of the FRP pipe 1 from being worn severely. The protective layer 5 will be described in more detail below.

A female screw 4a is formed at one end of the short length metal pipe 4, and a male screw 6a which can be engaged with this female screw 4a is formed at one end of the short length metal pipe 6. As shown in the drawing, the male screw section 6a protrudes outwardly beyond the outer pipe 3. A plurality of FRP pipes 1 thus constructed may be connected to each other by engaging the female screw 4a of one FRP pipe with the male screw 6a of another. Thus, a pipe assembly of any desired length can be obtained.

As shown in Figs. 2 and 3, an uneven surface configuration is imparted to the respective outer peripheries 4c and 6b of the short length metal pipes 4 and 6. This uneven surface configuration may be realized by knurlizing; it may, for example, be the flat cut or the double cut prescribed in JIS B 0951. For example, it may be a flat cut or a double cut with 0.5 module (m). Alternatively, the knurlizing angle (the angle the double cut makes with the axial direction) may be changed from the 30° prescribed in JIS to 45. Or, the knurlizing may be effected in such a manner that each mesh has a flat top.

The uneven surface configuration thus imparted to the respective outer peripheries of the short length metal pipes 4 and 6 enables these metal pipes to be connected to the inner peripheral sections at the ends of the fiber-reinforced plastic layer 3a so firmly that a considerably high torque can be transmitted through this connection. More preferably, the configuration of the inner peripheral sections at the ends of the fiber-reinforced plastic layer 3a and that of the outer peripheries of the short length metal pipes engaging therewith may have a non-circular configuration such as an oval or a polygonal one. This makes it possible to transmit a considerably high torque through the connected pipes.

The inner fiber-reinforced plastic covering layer (inner pipe) 2 and the outer fiber-reinforced plastic covering layer (outer pipe) 3 will now be described in more detail.

As stated above, in this molding the inner most layer 2a of the inner pipe 2 serves as the protective layer for the FRP pipe 1. For example, it may be formed from glass fiber cloth prepreg. On the other hand, the layer 2b serves to augment the stiffness in the axial direction of the inner pipe 2. It is formed as a fiber-reinforcing plastic layer, the reinforcing fibers of which are arranged in the axial direction. In particular, the reinforcing fibers used are carbon fibers. Preferably, they will be carbon fibers having a high elastic modulus or an ultrahigh elastic modulus, for example, carbon fibers having an elastic modulus in the range 400 to 800GPa.

As the matrix resin, thermosetting resins such as epoxy resin, unsaturated polyester resin, urethane acrylate, vinyl ester, phenol, or polyurethane may be used, and thermoplastic resins such as nylon 6, nylon 66, nylon 12, PBT, PET, polycarbonate, polyacetal, polyphenylene sulfide, polyether ether ketone, polyether sulfide, polyphenylene oxide, Noryl (trade mark of G.E. Corporation), polypropylene, or polyvinyl chloride may be used. Fillers such as $CaCO_3$, mica, $A\ell(OH)^3$ and talc may be added thereto. Furthermore, additives and coloring agents for improving heat resistance and weather resistance may be added thereto.

The innermost layer 3a of the outer pipe 3 is formed as a fiber-reinforced plastic layer for improving the torque characteristics of the pipe, the reinforcing fibers thereof being arranged 45° from the axial direction. In particular, the reinforcing fibers of the layers 3a and 3c may be carbon fibers, and more preferably, carbon fibers having a tensile strength of 3000 to 5000MPa and an elastic modulus of 240 to 500GPa. On the other hand, the middle layer 3b of the outer pipe 3 is formed as a layer for increasing the stiffness in the axial direction of the outer pipe 3. In particular, its reinforcing fibers are carbon fibers. The carbon fibers employed are preferably ones having a high elastic modulus or an ultrahigh elastic modulus, and more preferably, carbon fibers having an elastic modulus in the range of 400 to 800GPa.

Instead of carbon fibers, glass fibers or aramid fibers may be employed for the fiber-reinforced plastic layers 3a and 3c. The matrix resin used for them may be selected from among those mentioned above.

The fiber-reinforced plastic layers 2a, 2b, 3a, 3b and 3c may be formed by the winding method using prepreg, or by the filament winding method using impregnated fibers. Furthermore, it is also possible to use prepreg for particular layers, forming the other layers by the filament winding method.

As stated above, a protective layer 5 of a molding according to the present invention is provided outside the outermost layer 3c of the outer pipe 3.

The protective layer 5 of the present invention is either:

(a) a covering with a metal sleeve.

After forming the FRP pipe 1, the outer surface thereof is cut so as to make even its outer diameter. An adhesive agent is then applied to the surface, and a metal sleeve with a thickness of about 1 mm, for example, is put on it and made to adhere thereto. The metal sleeve used will preferably be an SUS material.

or (b) a metal mesh coating.

Metal mesh impregnated with resin is wound around the outer layer of the FRP pipe 1, and is cured by heating it along with the FRP pipe 1, thereby providing a metal layer on the surface. The metal mesh used is preferably a cloth-like stainless steel mesh having a fine mesh of about #400. The impregnated resin may be the above-mentioned matrix resin for the above-mentioned prepreg such as epoxy resin.

or (c) nickel electrocoating

When the outer layer of the FRP pipe 1 consists of a fiber-reinforced plastic layer of carbon fibers, the surface of the outer layer may be scraped off to expose the carbon fibers, thereby making the surface conductive. A copper layer having a thickness of 50 $\mu$m is then formed by applying a conductive coating material thereto. Then, a nickel electrocoating layer having a thickness of 100 $\mu$m is formed.

As described above, both the inner fiber-reinforced plastic covering layer (inner pipe) 2 and the outer fiber-reinforced plastic covering layer (outer pipe) 3 are formed by laminating a plurality of fiber-reinforced plastic layers, the reinforcing fibers of at least one of the plurality of layers being arranged in the axial direction for both the inner and outer pipes 2 and 3. In accordance with this invention, however, it may be at least either the inner pipe 2 or the outer pipe 3 that includes at least one layer whose reinforcing fibers are arranged in the axial direction.

Thus at least one of the plurality of layers making up the inner pipe 2 and/or the outer pipe 3 is formed as a layer whose reinforcing fibers are arranged in the axial direction. This augments the stiffness in the axial direction of the FRP pipe 1 and improves the impulsion transmission characteristics thereof, with the result that the boring efficiency thereof is enhanced.

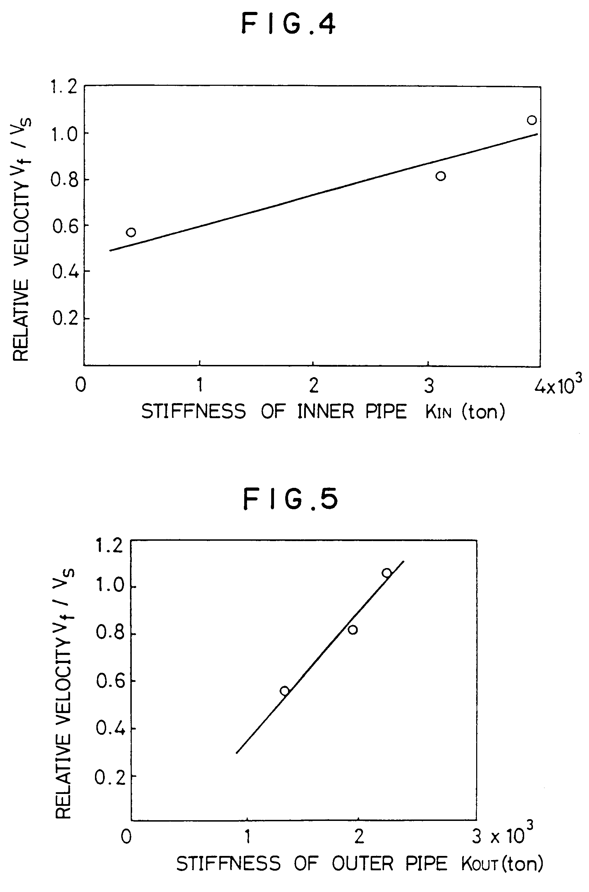

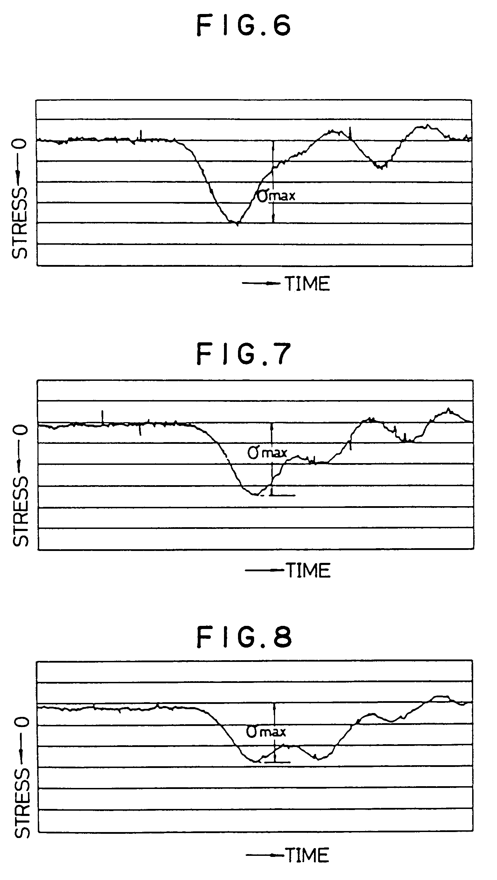

Figs. 4 and 5 show the relationship between the stiffness and the boring efficiency of the inner and outer pipes 2 and 3. In Figs. 4 and 5, the boring efficiency is represented by the ratio of the boring speed of an FRP pipe 1 (Vf) to that of a steel casing (Vs), i.e., the relative speed (Vf/Vs). As will be appreciated from Figs. 4 and 5, the boring efficiency is heightened as the stiffness in the axial direction of the inner and outer pipes 2 and 3 increases.

Furthermore, as will be appreciated from the result of an impulsive stress measurement plotted on the graphs of Figs. 6 to 8, the impulsion transmission characteristics of the FRP pipe 1 improve as the stiffness thereof in the axial direction increases. The stiffness in the axial direction of the FRP pipe 1 decreases in order from Fig. 6 to Fig. 8. As will be appreciated from these drawings, the maximum impulsive stress ($\sigma$max) which is transmitted to the measurement tube from the other end of the FRP pipe 1 after being propagated therethrough as a result of the same impulsion applied to one end thereof, decreases in the above order.

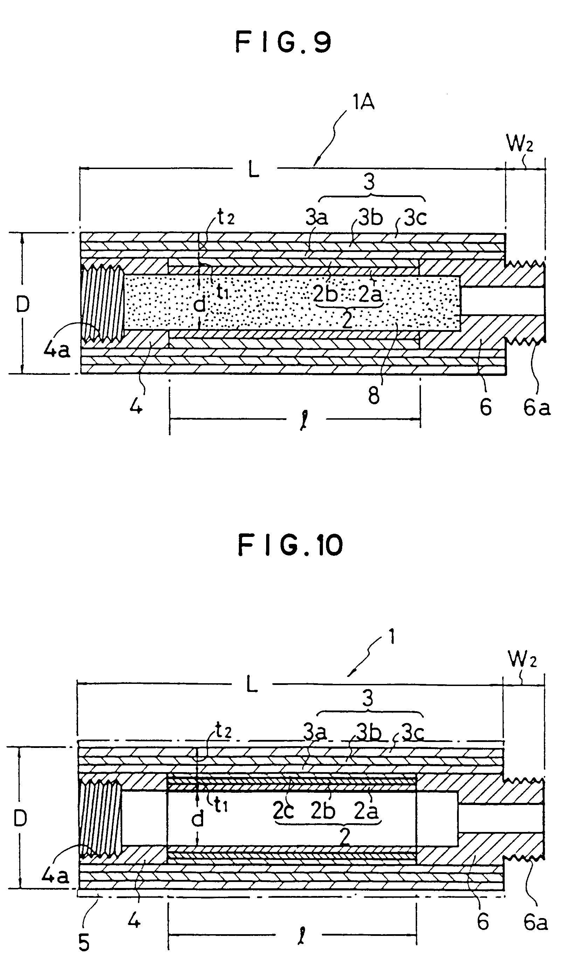

While in the above description the bar-like molding made of fiber-reinforced plastic materials of this invention is in the form of a hollow pipe made of fiber-reinforced plastic materials, i.e., an FRP pipe, it may also be realized as a solid shaft 1A made of fiber-reinforced plastic materials, as shown in Fig. 9.

The solid shaft made of fiber-reinforced plastic materials shown is realized by embedding a shaft 8 within an FRP pipe of the type shown in Fig. 1. The shaft 8 is preferably made of a light weight metal such as aluminum or a plastic material such as a hard polyurethane foam or a hard polystyrene foam.

According to the present invention in order to enhance the collapse strength of the molding 1 or 1A made of fiber-reinforced plastic materials having the above construction, the outermost layer (e.g., the layer 3c) of the outer fiber-reinforced plastic covering layer 3 thereof, and more preferably the outermost layer (e.g., the layer 3c) of the outer fiber-reinforced plastic covering layer 3 thereof and the inner most layer excluding the protective layer (e.g., the layer 2b) of the inner fiber-reinforced plastic covering layer 2 thereof are formed as layers whose reinforcing fibers are arranged in 90° direction with respect to the axial direction.

Fig. 10 shows an embodiment of a molding according to the present invention made of fiber-reinforced plastic materials of this invention which is designed in accordance with the above conception. In this embodiment, the molding made of fiber-reinforced plastic materials is realized in the form of an FRP pipe 1 which comprises a fiber-reinforced plastic covering layer consisting of an inner pipe 2 and an outer pipe 3, and short length metal pipes for connection 4 and 6 arranged at the ends of the fiber-reinforced plastic covering layer. This construction is the same as that of the FRP 1 pipe of the embodiment shown in Fig. 1.

In this embodiment, the outer pipe 3 is composed of three fiber-reinforced plastic layers 3a, 3b and 3c, the reinforcing fibers of the fiber-reinforced plastic layer 3b being arranged in the axial direction. The reinforcing fibers of the outermost fiber-reinforced plastic layer 3c are arranged perpendicularly to the axial direction, i.e., they run in the direction 90° from the axial direction. Although it is not to be so limited, the reinforcing fibers of the fiber-reinforced plastic layer 3a may be arranged 45° with respect to the axial direction.

The inner pipe 2 is also composed of a plurality of fiber-reinforced plastic layers; in this embodiment, it consists of three fiber-reinforced plastic layers 2a, 2b and 2c, the reinforcing fibers of the middle fiber-reinforced plastic layer 2b being the innermost layer without taking the protective 2a into consideration being arranged perpendicularly to the axial direction. The fiber-reinforced plastic layer 2c and the protective layer 2a may be made of glass fiber cloth prepreg.

5

If it is so required, the fiber-reinforced plastic layers 3c and 2b having the reinforcing fibers arranged perpendicular to, or 90° to, the axial direction, may be formed by alternately laminating the layers with the reinforcing fibers arranged 90° to the axial direction and the layer with the reinforcing fibers, arranged in the axial direction.

According to the present invention a protective layer 5 is provided outside the outermost layer 3c of the outer pipe 3, the construction of this protective layer being the same as in the first embodiment.

In accordance with this invention, the layer 2b of the inner pipe 2 shown in Fig. 2 will not always be necessary. However, providing a layer whose reinforcing fibers are arranged 90° with respect to the axial direction as the innermost layer when excluding the protective layer results in a very high collapse strength of the FRP pipe 1.

The molding made of fiber-reinforced plastic materials of this invention thus constructed as well as the method of manufacturing the same will now be described more specifically with reference to embodiments thereof.

[Embodiments 1 and 2]

As shown in Fig. 11, an elongated mandrel 10 comprising a main body section 10a and a reduced diameter section 10b was prepared. The length L1 of the main body section 10a was 1550 mm, the length L2 of the reduced diameter section 10b being 300 mm (Fig. 11(A)). The mandrel 10 had a circular cross-sectional configuration; the diameter D1 of the main body section 10a was 98 mm, the diameter D2 of the reduced diameter section 10b being 85 mm.

An inner fiber-reinforced plastic covering layer (inner pipe) 2 having a length of 1,000 mm ($\ell + 2\Delta\ell$) and a thickness of 6.0 mm was formed on the mandrel 10.

More particularly, the inner pipe 2 was composed of an inner fiber-reinforced plastic layer 2a which was first formed by winding around the mandrel 10 glass fiber cloth prepreg prepared by using glass fiber as the reinforcing fibers and epoxy resin as the matrix resin, with the usual winding method. The thickness of the inner fiber-reinforced plastic layer 2a was 1 mm.

Afterwards, carbon fiber prepreg prepared by using carbon fibers as the reinforcing fibers and epoxy resin as the matrix resin was wound around the layer 2a by the usual winding method in such a manner that the fibers thereof are arranged in the axial direction, thereby forming a fiber-reinforced plastic layer 2b, the thickness of which was 5 mm.

The end sections of the inner pipe 2 were then cut off by a length $\Delta\ell = 10$ mm, thereby forming an inner pipe having a predetermined length $\ell = 980$ mm (Fig. 11(B)).

Afterwards, short length steel pipes for connection 4 and 6 having an uneven surface configuration were put on the end sections of the mandrel 10, and were abutted against the ends of the first fiber-reinforced plastic layer, i.e., the first fiber-reinforced plastic hollow pipe 2a (Fig. 11(C)).

The short length steel pipe for connection 4 put on the main body section 10a of the mandrel 10 was a short length pipe having a female screw, as shown in Fig. 2. It consisted of a female screw section 4a having an inner diameter of 98 mm and including a pipe parallel screw thread such as JIS. PF5. and a mounting section 4b having an inner diameter of 98.5 mm. Its outer diameter was 110 mm. In particular, its outer periphery 4c had an uneven surface configuration with a double-cut pattern of 0.5m (module) as prescribed in JIS B 0951. In particular, the knurlizing angle (that the double cut makes with respect to the axial direction) was changed from the 30° prescribed in said JIS to 45°.

The short length steel pipe for connection 6 put on the reduced diameter section 10b of the mandrel 10 was a short length pipe having a male screw, as shown in Fig. 3. Its inner periphery had a complementary configuration with respect to the reduced diameter section 10b of the mandrel 10. It comprised a steptted mounting hole section 6c having inner diameters 85.5 mm and 98.5 mm, an outer periphery 6b having an outer diameter of 110 mm, and a male screw section 6a having an outer diameter 98 mm and a pipe parallel screw thread such as JIS.PF5. The outer periphery 6b had the same uneven surface configuration as that of the short length pipe 4 having a female screw.

In this embodiment, the length w2 of the screw sections 4a and 6a was 130 mm. Both of the lengths w1 and w3 of the outer peripheries 4c and 6b having an uneven surface configuration were 260 mm.

Subsequently, an outer fiber-reinforced plastic covering layer or an outer pipe 3 was formed in such a manner as to cover the respective outer peripheries of the inner pipe 2 and the short length metal pipes 4, 6. The outer pipe 3 had a length L of 1500 mm, an outer diameter D of 120 mm and a wall thickness t2 of 5 mm. It consisted of three laminated fiber-reinforced plastic layers 3a, 3b and 3c. The innermost layer 3a was formed as a fiber-reinforced plastic layer whose reinforcing fibers were arranged at an angle of 45° from the axial direction, the middle layer 3b being formed as a fiber-reinforced plastic layer whose

6

reinforcing fibers were arranged in the axial direction.

The fiber-reinforced plastic layers 3a, 3b and 3c were formed by winding carbon fiber prepreg prepared by using carbon fibers as the reinforcing fibers and epoxy resin as the matrix resin, with the usual winding method. The thicknesses of fiber-reinforced plastic layers 3a, 3b and 3c were 1 mm, 3 mm and 1 mm, respectively (Fig. 11(D)).

The fiber-reinforced plastic layers thus wound around the mandrel 10 were cured. In this embodiment, the curing temperature was raised to 130°C at the rate of 10°C/min, which was held for two hours, and then cooled down at the rate of 10°C/min.

After the cooling, the mandrel 10 was pulled out in the direction indicated by the arrow in Fig. 11(D). The end surface sections of the outer pipe 3 were shaped by appropriately cutting the same. Thus, a bar-like molding made of fiber-reinforced plastic materials 1 in the form of a pipe shown in Fig. 1 was obtained. It exhibited a circular cross-sectional configuration, and had a total length L of 1500 mm (excluding the male screw protrusion w2 = 130 mm), and an outer diameter D of 120 mm.

An experiment was conducted by preparing different FRP pipes 1 using different reinforcing fibers for the fiber-reinforced plastic layers 2b, 3a, 3b and 3c. Table 1 shows the result of the experiment.

In Embodiment 1, carbon fibers having a tensile strength of 3000MPa and an ultrahigh elastic modulus of 700GPa were employed for the inner pipe 2. For the outer pipe 3, high elastic modulus carbon fibers having a tensile strength of 3000MPa and an elastic modulus of 500GPa were employed.

In Embodiment 2, high elastic modulus carbon fibers having a tensile strength of 3000MPa and an elastic modulus of 500GPa were employed for both the inner and outer pipes 2 and 3.

[Boring Test]

Using a drifter (MDH100-A manufactured by Mitsubishi Heavy Industries, Ltd.), a rock was bored while imparting percussions through two pipes connected together (an FPR pipe to the drifter side and a steel casing to the boring point side) by the double-pipe drilling system. The boring depth was measured after continuing the operation for five minutes. The operation was performed under the following conditions.

| | |
|---|---|
| Rotating speed: | 1650 bpm |
| Torque: | 20 to 40 kg/cm² (hydraulic pressure) |
| | 80 to 160 kg.m |
| Feed Force: | 50 kg/cm² (hydraulic pressure) |
| | 830 kg |

[Embodiment 3]

An FRP pipe was prepared in the same manner as in Embodiment 1, except for the fact that the fiber-reinforced plastic layer 2b of the inner pipe 2 was not formed. A boring test was performed in the same manner as in Embodiments 1 and 2. The result of the test is shown in Table 1.

[Comparison Example 1]

An FRP pipe was prepared in the same manner as in Embodiment 1, except for the fact that no fiber-reinforced plastic layer 3b was formed in the outer pipe 3, and that high elastic modulus carbon fibers having a tensile strength of 3000MPa and an elastic modulus of 500GPa were employed for the fiber-reinforced plastic layer 2b of the inner pipe 2. A boring test was performed in the same manner as in Embodiments 1 and 2. The result of the test is shown in Table 1.

[Embodiment 4]

An FRP pipe was prepared in the same manner as in Embodiment 1, except for the fact that no fiber-reinforced plastic layer 2b was formed in the inner pipe 2, and that ordinary carbon fibers having an elastic modulus of 240GPa were employed for the fiber-reinforced plastic layer 3b of the outer pipe 3. A boring test was performed in the same manner as in Embodiments 1 and 2. The result of the test is shown in Table 1.

EP 0 361 639 B1

[Comparison Example 2]

An FRP pipe was prepared in the same manner as in Embodiment 1, except for the fact that the reinforcing fibers of both of the fiber-reinforced plastic layers 2b and 3b of the inner and outer pipes 2 and 3 were arranged at an angle of 45° from the axial direction, and that high elastic modulus carbon fibers having an elastic modulus of 500GPa were employed for the fiber-reinforced plastic layers 2b and 3b of the outer and inner pipes 2 and 3. A boring test was performed in the same manner as in Embodiments 1 to 4. The result of the test is shown in Table 1.

[Comparison Example 3]

A boring test was conducted in the same manner as in Embodiments 1 to 4 using a steel pipe having a length of 1500 mm, an outer diameter of 120 mm, and a wall thickness of 6.5 mm. The result of the test is shown in Table 1.

[Embodiment 5]

As shown in Fig. 11, an elongated mandrel 10 comprising a main body section 10a and a reduced diameter section 10b was prepared. The length L1 of the main body section 10a was 1550 mm, the length L2 of the reduced diameter section 10b being 300 mm (Fig. 11(A)). The mandrel 10 had a circular cross-sectional configuration; the diameter D1 of the main body section 10a was 98 mm, the diameter D2 of the reduced diameter section 10b being 85 mm.

An inner fiber-reinforced plastic covering layer (inner pipe) 2 having a length of 1,000 ($\ell$ + 2$\Delta\ell$) and a thickness of 7.0 mm was formed on the mandrel 10.

More particularly, the inner pipe 2 was composed of an inner fiber-reinforced plastic layer 2a which was first formed by winding around the mandrel 10 carbon fiber prepreg prepared by using carbon fibers as the reinforcing fibers and epoxy resin as the matrix resin, with the usual winding method in such a manner that the fibers are alternately arranged in the axial direction and in 90° direction to the axial direction. The thickness of the inner fiber-reinforced plastic layer 2a was 2 mm.

Afterwards, glass fiber cloth prepreg prepared by using glass fibers as the reinforcing fibers and epoxy resin as the matrix resin was wound around the layer 2a by the usual winding method, thereby forming a fiber-reinforced plastic layer 2b, the thickness of which was 5 mm.

The end sections of the inner pipe 2 were then cut off by a length $\Delta\ell$ = 10 mm, thereby forming an inner pipe having a predetermined length $\ell$ = 980 mm (Fig. 11(B)).

Afterwards, short length steel pipes for connection 4 and 6 having an uneven surface configuration were inserted into the mandrel 10 at the end sections thereof, and were abutted against the ends of the first fiber-reinforced plastic layer, i.e., the first fiber-reinforced plastic hollow pipe 2 (Fig. 11(C)).

The short length steel pipe for connection 4 put on the main body section 10a of the mandrel 10 was a short length pipe having a female screw, as shown in Fig. 2. It consisted of a female screw section 4a having an inner diameter of 98 mm and including a pipe parallel screw thread such as JIS. PF5, and a mounting section 4b having an inner diameter of 98.5 mm. Its outer diameter was 112 mm. In particular, its outer periphery 4c had an uneven surface configuration with a double-cut pattern of 0.5m (module) as prescribed in JIS B 0951. In particular, the knurlizing angle (that the double cut makes with respect to the axial direction) was changed from the 30° prescribed in said JIS to 45°.

The short length steel pipe for connection 6 put on the reduced diameter section 10b of the mandrel 10 was a short length pipe having a male screw, as shown in Fig. 3. Its inner periphery had a complementary configuration with respect to the reduced diameter section 10b of the mandrel 10. It comprised a stepped mounting hole section 6c having inner diameters 85.5 mm and 98.5 mm, an outer periphery 6b having an outer diameter of 112 mm, and a male screw section 6a having an outer diameter 98 mm and a pipe parallel screw thread such as JIS.PF5. The outer periphery 6b had the same uneven surface configuration as that of the short length pipe 4 having a female screw.

In this embodiment, the length w2 of the screw sections 4a and 6a was 130 mm. Both of the lengths w1 and w3 of the outer peripheries 4c and 6b having an uneven surface configuration were 260 mm.

Subsequently, an outer fiber-reinforced plastic covering layer or an outer pipe 3 was formed in such a manner as to cover the respective outer peripheries of the inner pipe 2 and the short length metal pipes 4, 6. The outer pipe 3 had a length L of 1500 mm, an outer diameter D of 122 mm and a wall thickness t2 of 5 mm. It consisted of three laminated fiber-reinforced plastic layers 3a, 3b and 3c. The innermost layer 3a was formed as a fiber-reinforced plastic layer whose reinforcing fibers were arranged at an angle of 45°

8

EP 0 361 639 B1

from the axial direction, the middle layer 3b being formed as a fiber-reinforced plastic layer whose reinforcing fibers were arranged in the axial direction. The outermost layer 3c was formed, in accordance with the present invention as a fibre-reinforced plastic layer whose reinforcing fibers were alternately arranged in the axial direction and in the 90° direction to the axial direction.

The fiber-reinforced plastic layers 3a, 3b and 3c were formed by winding carbon fiber prepreg prepared by using carbon fibers as the reinforcing fibers and epoxy resin as the matrix resin, with the usual winding method. The thicknesses of fiber-reinforced plastic layers 3a, 3b and 3c were 2 mm, 1 mm and 2 mm, respectively (Fig. 11(D)).

The fiber-reinforced plastic layers thus wound around the mandrel 10 were cured. In this embodiment, the curing temperature was raised to 130°c at the rate of 10°C/min, which was held for two hours, and then cooled down at the rate of 10°C/min.

After the cooling, the mandrel 10 was pulled out in the direction indicated by the arrow in Fig. 11(D). The end surface sections of the outer pipe 3 were shaped by appropriately cutting the same. Thus, a bar-like molding made of fiber-reinforced plastic materials 1 in the form of a pipe as shown in Figs. 1 and 10 was obtained. It exhibited a circular cross-sectional configuration, and had a total length L of 1500 mm (excluding the male screw protrusion w2 = 130 mm), and an outer diameter D of 120 mm.

An experiment was conducted by preparing different FRP pipes 1 using different reinforcing fibers for the fiber-reinforced plastic layers 2b, 3a, 3b and 3c. Table 1 shows the result of the experiment.

In this embodiment, the usual carbon fibers having a tensile strength of 3000MPa and an ultrahigh elastic modulus of 240GPa were employed. A boring test was performed in the same manner as in Embodiments 1 and 2. The result of the test is shown in Table 1. Further, a collapse test was effected by imparting a clamping force of 33 tons on the outer periphery of the pipe at the middle portion and in the diametrical direction thereof. No fracture was occurred. The pipe manufactured according to Comparison Example 1 mentioned above was tested in the same manner as in Example 6. The pipe was completely failured at the portions clamped or the fiber-reinforced plastic portions.

Table 1

| | Stiffness (ton) | | Torque Kg/cm$^2$ (Kg.m) | Boring speed mm/min |
|---|---|---|---|---|
| | Inner pipe | Outer pipe | | |
| Embodiment 1 | 38800 | 22400 | 60 (225) | 59.0 |
| Embodiment 2 | 31000 | 19400 | 60 (225) | 45.0 |
| Embodiment 3 | 4000 | 20000 | 60 (225) | 41.0 |
| Comparison 1 | 20000 | 4000 | 60 (225) | 35.0 |
| Embodiment 4 | 4000 | 13200 | 60 (225) | 31.3 |
| Embodiment 5 | 8400 | 14000 | 60 (225) | 33.0 |
| Comparison 2 | 3700 | 4100 | 60 (225) | 7.0 |
| Comparison 3 | 48600 | | 60 (225) | 54.7 |

As will be appreciated from the above examples, the bar-like molding made of fiber-reinforced plastic materials as described provides an increased stiffness in the axial direction in a fiber-reinforced plastic pipe as well as enhanced impulsive transmission characteristics thereof, with the result that a remarkably improved boring efficiency can be attained. In particular, those employing high elastic modulus or ultrahigh elastic modulus carbon fibers as in Embodiments 1 and 2 can attain a boring efficiency equal or superior to that attained by conventional boring casing using steels.

While the above examples employ carbon fibers for the fiber-reinforced plastic layers, they can employ other types of fibers in some layers, as stated above. Further, while in the above embodiments glass fiber cloth prepreg is employed for the fiber-reinforced plastic layer 2a serving as a protective layer, other types of reinforcing fibers can be employed for it.

When all the fiber-reinforced plastic layers are formed from prepreg, the curing process can be conducted simultaneously after all of them have been wound around the mandrel, as described above. However, the curing may be individually performed for each layer.

When manufacturing a bar-like molding made of fiber-reinforced plastic materials in the form of a solid shaft such as shown in Fig. 9, the embedded shaft 8 may be utilized as the mandrel, thereby providing a bar-like molding made of fiber-reinforced plastic materials of the mandrel built-in type.

9

Further, in accordance with the present invention, at least the outermost layer of the outer fiber-reinforced plastic covering layer, more preferably the outermost layer of the outer fiber-reinforced plastic covering layer and the inner most layer of the inner fiber-reinforced plastic layer may be formed as layers whose reinforcing fibers are arranged 90° to the axial direction, thereby enhancing the collapse strength of the bar-like molding made of fiber-reinforced plastic materials.

Having the above-described construction, the bar-like molding made of fiber-reinforced plastic materials of this invention has relatively light weight, free from corrosion problems, and is capable of transmitting a considerably high torque and impulsion. In addition, the molding in accordance with this invention is characterized by its ability to withstand intensive percussions and its high stiffness in the axial direction, so that, when used as a boring casing, it can provide an improved boring efficiency. Furthermore, it is advantageous in that the plastic pipe thereof does not suffer strength degradation if it undergoes machining or the like, and that it exhibits a high tensile strength and a high internal pressure resistance. Since it can be extended by connecting pieces thereof, it will be suited for various purposes.

## Claims

1. A boring casing comprising a fibre-reinforced plastic covering layer formed by laminating a plurality of fibre-reinforced plastic layers and short-length metal pipes (4, 6) arranged at the ends of the fibre-reinforced plastic covering layer (2), the boring casing further comprising:

    A. the metal pipes are adapted for connection to the metal pipes of an adjacent boring casing, each of said short length metal pipes having an uneven surface configuration on the outer periphery;

    B. said fibre-reinforced plastic covering layer including an inner fibre-reinforced plastic covering layer (2b) composed of a plurality of fibre-reinforced plastic layers and abutting at its ends against the respective inner end surfaces of said short length metal pipes (4, 6), and an outer fibre-reinforced plastic covering layer (3) composed of a plurality of fibre-reinforced plastic layers and formed in such a manner as to cover the outer peripheries of said inner fibre-reinforced plastic covering layer (2) and said short length metal pipes (4, 6);

    C. at least one (2a, 2b) of said plurality of fibre-reinforced plastic layers of each of said inner and outer fibre-reinforced plastic covering layers (2, 3) being a layer whose reinforcing fibres are carbon fibres and are arranged in the axial direction of the boring casing;

    D. at least the outermost layer (3c) of the outer fibre-reinforced plastic covering layer (3) having reinforcing fibres arranged 90° to the axial direction of the boring casing; and

    E. a protective layer formed by a metal sleeve which is provided on the surface of the outermost layer (3c) of the outer fiber-reinforced plastic covering layer.

2. A boring casing as claimed in claim 1, wherein said carbon fibers have an elastic modulus of 400 GPa to 800 GPa.

3. A boring casing as claimed in claim 1, wherein at least one (2b, 3b) of said plurality of fiber-reinforced plastic layers of each of said inner and outer fiber-reinforced plastic covering layers is the layer whose reinforcing fibers are arranged in the axial direction of the boring casing.

4. A boring casing as claimed in claim 1, wherein the innermost layer (2b) is also the layer whose reinforcing fibers are arranged 90° to the axial direction.

5. A boring casing as claimed in claim 1, further comprising a protective layer (2a) provided on the surface of the innermost layer of the inner fiber-reinforced plastic covering layer.

6. A boring casing as claimed in any of claims 1 to 5, wherein carbon fibers, glass fibers or aramid fibers are employed as the reinforcing fibers of the fiber-reinforced plastic layers except for said axially arranged reinforcing fibers, and wherein thermosetting resins such as epoxy resin, unsaturated polyester resin, urethane acrylate, vinyl ester, phenol, or polyurethane, and thermo-plastic resins such as polyamide 6, polyamide 66, polyamide 12, polybutylene terephthalate, polyethylene terephthalate, polycarbonate, polyacetal, polyphenylene sulfide, polyether ether ketone, polyether sulfide, polyphenylene oxide, Noryl, polyproplene, or polyvinyl are employed as the matrix resin.

7. A method of manufacturing a boring casing made of fiber-reinforced plastic materials, comprising at least the steps of:

(a) preparing a mandrel composed of a main body section having a predetermined diameter and a predetermined length, and an end section integrally connected to said main body section and having a reduced diameter;

(b) forming on the main body section of the mandrel an inner fiber-reinforced plastic covering layer composed of a plurality of fiber-reinforced plastic layers with a predetermined thickness;

(c) putting short length metal pipes having an uneven surface configuration on the end sections of said mandrel, and abutting them against the ends of said inner fiber-reinforced plastic covering layer;

(d) forming an outer fiber-reinforced plastic covering layer with a predetermined thickness in such a manner to cover the outer peripheries of said inner fiber-reinforced plastic covering layer and said short length metal pipes for connection, the reinforcing fibers of at least one of said plurality of fiber-reinforced plastic layers of at least one of said outer reinforced plastic covering layer and said inner reinforced plastic covering layer being carbon fibers and arranged in the axial direction of the bar-like molding and the reinforcing fibres of at least the outermost layer of the outer fibre reinforced plastic layer (3c) are arranged 90° to the axial direction of the molding; and

(e) pulling out said mandrel in one axial direction; the plastic layers of steps (b) and (d) being cured either simultaneously or individually.

8. A method as claimed in claim 7, wherein the inner most layer of the inner fiber-reinforced plastic covering layer is also formed as a layer whose reinforcing fibers are arranged 90° to the axial direction.

**Patentansprüche**

1. Ein Bohrrohr, umfassend eine faserverstärkte Kunststoffdeckschicht, die durch Laminieren einer Vielzahl faserverstärkter Kunststoffschichten gebildet ist, und Metallrohre (4,6) kurzer Länge, die an den Enden der faserverstärkten Kunststoffdeckschicht (2) angeordnet sind, wobei das Bohrrohr weiterhin umfaßt:

A. daß die Metallrohre für die Verbindung mit Metallrohren eines angrenzenden Bohrrohres angepaßt sind, wobei jedes dieser Metallrohre kurzer Länge eine unebene Oberflächenkonfiguration auf seinem äußeren Umfang aufweist;

B. daß die faserverstärkte Kunststoffdeckschicht eine innere faserverstärkte Kunststoffdeckschicht (2b), die aus einer Vielzahl von faserverstärkten Kunststoffschichten besteht und an ihren Enden gegen die entsprechenden inneren Endflächen der Metallrohre (4,6) kurzer Länge anstößt, und eine äußere faserverstärkte Kunststoffdeckschicht (3), die aus einer Vielzahl faserverstärkter Kunststoffschichten besteht und auf solch eine Weise ausgeformt ist, daß sie die äußeren Umfangsflächen der besagten inneren faserverstärkten Kunststoffdeckschicht (2) und der Metallrohre (4,6) kurzer Länge abdeckt, umfaßt;

C. daß wenigstens eine (2a,2b) der Vielzahl von faserverstärkten Kunststoffschichten jeweils sowohl von der inneren als auch von der äußeren faserverstärkten Kunststoffdeckschicht (2,3) eine Schicht ist, deren verstärkende Fasern Kohlenstoffasern sind und in der axialen Richtung des Bohrrohres angeordnet sind;

D. daß wenigstens die äußerste Schicht (3c) der äußeren faserverstärkten Kunststoffdeckschicht (3) verstärkende Fasern hat, die 90° zu der axialen Richtung des Bohrrohres angeordnet sind; und

E. daß eine Schutzschicht, die durch eine Metallhülse gebildet wird, auf der Oberfläche der äußersten Schicht (3c) der äußeren faserverstärkten Kunststoffdeckschicht vorgesehen ist.

2. Ein Bohrrohr nach Anspruch 1, bei dem die Kohlenstofffasern einen Elastizitätsmodul von 400 GPa bis 800 GPa aufweisen.

3. Ein Bohrrohr nach Anspruch 1, bei dem wenigstens eine (2b,3b) der Vielzahl faserverstärkter Kunststoffschichten jeweils sowohl von der inneren als auch von der äußeren faserverstärkten Kunststoffdeckschicht die Schichtist, deren verstärkende Fasern in der axialen Richtung des Bohrrohres angeordnet sind.

4. Ein Bohrrohr nach Anspruch 1, bei dem die innerste Schicht (2b) auch die Schicht ist, deren verstärkende Fasern 90° zu der axialen Richtung angeordnet sind.

**5.** Ein Bohrrohr nach Anspruch 1, das weiterhin eine Schutzschicht (2a) umfaßt, die auf der Oberfläche der innersten Schicht der inneren faserverstärkten Kunststoffdeckschicht vorgesehen ist.

**6.** Ein Bohrrohr nach einem der Ansprüche 1 bis 5, bei dem Kohlenstoffasern, Glasfasern oder Aramidfasern als verstärkende Fasern der faserverstärkten Kunststoffschichten mit Ausnahme für die axial angeordneten verstärkenden Fasern verwendet werden und bei dem wärmehärtende Harze wie Epoxyharz, ungesättigtes Polyesterharz, Urethanacrylat, Vinylester, Phenol oder Polyurethan und thermoplastische Harze wie Polyamid 6, Polyamid 66, Polyamid 12, Polybutylenterephthalat,polyethylenterephthalat, Polycarbonat, Polyacetal, Polyphenylensulfid, Polyetheretherketon, Polyethersulfid, Polyphenylenoxid, Noryl, Polypropylen oder Polyvinyl als Matrixharz verwendet werden.

**7.** Ein Verfahren zum Herstellen eines aus faserverstärkten Kunststoffmaterialien hergestellten Bohrrohres, das wenigstens die folgenden Schritte umfaßt, daß

(a) ein Dorn hergestellt wird, der aus einem Hauptkörperabschnitt mit einem vorgegebenen Durchmesser und einer vorgegebenen Länge und einem Endabschnitt, der einstückig mit dem Hauptkörperabschnitt verbunden ist und einen reduzierten Durchmesser aufweist, besteht;

(b) auf dem Hauptkörperabschnitt des Dorns eine innere faserverstärkte Kunststoffdeckschicht, die aus einer Vielzahl faserverstärkter Kunststoffschichten besteht, mit einer vorgegebenen Dicke ausgeformt wird;

(c) Metallrohre kurzer Länge mit einer unebenen Oberflächenkonfiguration auf die Endabschnitte des Dornes gesetzt werden und diese gegen die Enden der inneren faserverstärkten Kunststoffdeckschicht zum Anschlag gebracht werden;

(d) eine äußere faserverstärkte Kunststoffdeckschicht mit einer vorgegebenen Dicke auf solch eine Weise ausgeformt wird, daß sie die äußeren Umfangsflächen der inneren faserverstärkten Kunststoffdeckschicht und der Metallrohre kurzer Länge für die Verbindung abdeckt, wobei die verstärkenden Fasern wenigstens einer der Vielzahl faserverstärkter Kunststoffschichten von wenigstens einer der äußeren verstärkten Kunststoffdeckschicht und der inneren verstärkten Kunststoffdeckschicht Kohlenstoffasern sind und diese in der axialen Richtung des stangenartigen Formlings angeordnet sind, und die verstärkenden Fasern von wenigstens der äußersten Schicht der äußeren faserverstärkten Kunststoffschicht (3c) 90° zu der axialen Richtung des Formlings angeordnet sind; und

(e) der Dorn in einer axialen Richtung herausgezogen wird; und die Kunststoffschichten der Schritte (b) und (d) entweder gleichzeitig oder jeweils für sich gehärtet werden.

**8.** Ein Verfahren nach Anspruch 7, bei dem die innerste Schicht der inneren faserverstärkten Kunststoffdeckschicht auch als eine Schicht ausgeformt wird, deren verstärkende Fasern 90° zu der axialen Richtung angeordnet sind.

## Revendications

**1.** Tube de forage comprenant une couche de revêtement en matière plastique renforcée par fibres formée par la disposition en couche d'une pluralité de couches en matière plastique renforcée par fibres et de tubes (4, 6) métalliques de faible longueur disposés aux extrémités de la couche (2) de couverture en matière plastique renforcée par fibres, le tube de forage comprenant, en outre:

A. les tubes métalliques sont adaptés pour être reliés à des tubes métalliques d'un tube de forage adjacent, chacun desdits tubes métalliques de faible longueur présentant une configuration de surface rugueuse sur la périphérie externe;

B. ladite couche de revêtement en matière plastique renforcée par fibres inclut une couche (2b) de revêtement en matière plastique renforcée par fibres composée d'une pluralité de couches en matière plastique renforcée par fibres et venant en butée à ses extrémités contre les surfaces d'extrémités internes respectives desdits tubes (4, 6) métalliques de faible longueur, et une couche (3) de revêtement en matière plastique renforcée par fibres composée d'une pluralité de couches en matière plastique renforcée par fibres et formée de manière à recouvrir les périphéries externes de ladite couche (2) de revêtement en matière plastique renforcée par fibres interne et desdits tubes (4, 6) métalliques de faible longueur;

C. au moins une couche (2a, 2b) de ladite pluralité de couches en matière plastique renforcée par fibres de chacune desdites couches (2, 3) de revêtement en matière plastique renforcée par fibres interne et externe est une couche dont les fibres de renforcement sont des fibres de carbone et sont disposées dans le sens axial du tube de forage;

D. au moins la couche (3c) la plus à l'extérieur de la couche (3) de revêtement en matière plastique renforcée par fibres externe dispose de fibres de renforcement situées à 90° par rapport au sens axial du tube de forage; et

E. une couche protectrice formée par un fourreau métallique est prévue sur la surface de la couche (3c) la plus à l'extérieur de la couche de revêtement en matière plastique renforcée par fibres externe.

2. Tube de forage selon la revendication 1, dans lequel lesdites fibres de carbone disposent d'un module d'élasticité de 400 GPa à 800 GPa.

3. Tube de forage selon la revendication 1, dans lequel au moins une couche (2b, 3b) de ladite pluralité de couches en matière plastique renforcée par fibres de chacune desdites couches de revêtement en matière plastique renforcée par fibres interne et externe est la couche dont les fibres de renforcement sont disposées dans le sens axial du tube de forage.

4. Tube de forage selon la revendication 1, dans lequel la couche (2b) la plus à l'intérieur est aussi la couche dont les fibres de renforcement sont disposées à 90° par rapport au sens axial.

5. Tube de forage selon la revendication 1, comprenant en outre une couche (2a) de protection prévue sur la surface de la couche la plus à l'intérieur de la couche de revêtement en matière plastique renforcée par fibres interne.

6. Tube de forage selon l'une quelconque des revendications 1 à 5, dans lequel des fibres de carbone, des fibres de verre ou des fibres d'aramide sont utilisées comme fibres de renforcement des couches en matière plastique renforcée par fibres à l'exception desdits fibres de renforcement qui sont disposées axialement, et dans lequel des résines thermodurcissables telles qu'une résine époxy, une résine polyester non saturée, uréthane acrylate, ester vinylique, phénol ou polyuréthanne, et des résines thermoplastiques telles que le polyamide 6, le polyamide 66, le polyamide 12, le polybutylène téréphtalate, le polyéthylène téréphtalate, le polycarbonate, le polyacétal, le sulfure de polyphénylène, le polyéther éther kétone, le sulfure de polyéther, l'oxyde de polyphénylène, le Noryl, le polypropylène ou le polyvinyle sont utilisés comme résine de matrice.

7. Procédé de fabrication d'un tube de forage réalisé en matières plastiques renforcées par fibres, comprenant au moins les étapes consistant à:

(a) préparer un mandrin composé d'une section formant corps principal présentant un diamètre prédéterminé et une longueur prédéterminée, et une section d'extrémité reliée en une pièce à ladite section corps principal et présentant un diamètre réduit;

(b) former, sur la section formant corps principal du mandrin, une couche de revêtement en matière plastique renforcée par fibres interne composée d'une pluralité de couches en plastique renforcé par fibres présentant une épaisseur prédéterminée;

(c) disposer des tubes métalliques de faible longueur présentant une configuration de surface rugueuse sur les sections d'extrémités dudit mandrin, et les mettre en butée contre les extrémités de ladite couche de revêtement en matière plastique renforcée par fibres interne;

(d) former une couche de revêtement en matière plastique renforcée par fibres externe présentant une épaisseur prédéterminée de manière à couvrir les périphéries externes de ladite couche de revêtement en matière plastique renforcée par fibres interne et desdits tubes de liaison métalliques de faible longueur, les fibres de renforcement d'au moins une couche de ladite pluralité de couches en matière plastique renforcée par fibres d'au moins une couche de ladite couche de revêtement en matière plastique renforcée par fibres externe et de ladite couche de couverture en plastique renforcé par fibres interne étant en fibres de carbone et disposées dans le sens axial de la pièce moulée en forme de barre et les fibres de renforcement d'au moins la couche la plus à l'extérieur de la couche en matière plastique renforcée par fibres externes (3c) sont disposées à 90° par rapport au sens axial de la pièce moulée; et

(e) tirer ledit mandrin dans un sens axial;

les couches en matière plastique des étapes (b) et (d) étant durcies soit simultanément ou individuellement.

8. Procédé selon la revendication 7, dans lequel la couche la plus à l'intérieur de la couche de revêtement en matière plastique renforcée par fibres interne est aussi formée comme une couche dont les fibres de renforcement sont disposées à 90° par rapport au sens axial.

EP 0 361 639 B1

# F I G . 1

# F I G . 2

# F I G . 3

15

# F I G .4

# F I G .5

# F I G. 6

STRESS ← 0

$\sigma_{max}$

— TIME

# F I G. 7

STRESS ← 0

$\sigma_{max}$

— TIME

# F I G. 8

STRESS ← 0

$\sigma_{max}$

— TIME

# F I G. 9

# F I G. 10

# F I G.11A

# F I G.11B

# F I G.11C

# F I G.11D